# EUROPÄISCHE PATENTSCHRIFT

(11) **EP 2 715 181 B1**
(45) Veröffentlichungstag und Bekanntmachung des Hinweises auf die Patenterteilung: **10.08.2016**
(21) Anmeldenummer: 12715603.2
(22) Anmeldetag: 11.04.2012
(51) Int. Cl.: F16D 65/18, B60T 13/74

(54) **ELEKTROMECHANISCH BETÄTIGBARE KRAFTFAHRZEUGBREMSE MIT WAHLWEISER SELBSTHEMMUNG**
ELECTROMECHANICALLY ACTUABLE MOTOR VEHICLE BRAKE WITH SELECTIVE SELF-LOCKING
FREIN DE VÉHICULE À MOTEUR POUVANT ÊTRE ACTIONNÉ DE MANIÈRE ÉLECTROMÉCANIQUE, POURVU D'UN DISPOSITIF D'AUTOBLOCAGE POUVANT ÊTRE ACTIVÉ OU DÉSACTIVÉ

(30) Priorität: 31.05.2011 DE 102011102860
(43) Veröffentlichungstag der Anmeldung: 09.04.2014
(73) Patentinhaber: Lucas Automotive GmbH, 56070 Koblenz (DE)
(72) Erfinder: GIERING, Wilfried, Ridgeway, Ontario, L0S 1N0 (CA)
(74) Vertreter: Thum, Bernhard
(86) Internationale Anmeldenummer: PCT/EP2012/001570
(87) Internationale Veröffentlichungsnummer: WO 2012/163447

(56) Entgegenhaltungen:
- EP-A2- 0 334 434
- WO-A1-98/09084
- US-A1- 2010 163 351

## Beschreibung

Die Erfindung betrifft eine elektromechanisch betätigbare Kraftfahrzeugbremse mit einer Aktuatorbaugruppe, umfassend ein Gehäuse, ein relativ zu dem Gehäuse verlagerbares Stellglied zum Verlagern eines Bremsbelags, einen motorischen Antrieb, eine zwischen dem motorischen Antrieb und dem verlagerbaren Stellglied angeordnete Verlagerungsmechanik, und eine der Verlagerungsmechanik zugeordnete Getriebeanordnung, wobei die Verlagerungsmechanik einen Kugelgewindetrieb mit einer drehantreibbaren Spindel und einer in dem Gehäuse linear verschiebbaren Mutter aufweist, wobei die Mutter zur Verlagerung des Bremsbelags durch Drehantreiben der Spindel innerhalb des Gehäuses verlagerbar ist.

Derartige elektromechanisch betätigbare Kraftfahrzeugbremsen sind aus dem Stand der Technik bekannt.

So beschreibt das Dokument WO 2008/037738 A1 eine sowohl hydraulisch als auch elektromechanisch betätigbare Kraftfahrzeugbremse. In einer Normalbetriebssituation, das heißt während der Fahrt des Kraftfahrzeugs, wird diese Kraftfahrzeugbremse in üblicher Weise hydraulisch betätigt. Zur Aktivierung einer Feststellbremse wird allerdings die elektromechanische Betätigungsfunktion aktiviert. Dabei wird ein Elektromotor angesteuert, der über eine Verlagerungsmechanik mit einer Getriebeanordnung eine Spindel-Mutter-Anordnung antreibt. Die Getriebeanordnung ist mit einem Schneckenradgetriebe selbsthemmend ausgebildet, um zu verhindern, dass sich bei aktivierter Feststellbremse die Feststellbremswirkung reduziert. Die Selbsthemmung hat aber den Nachteil, dass diese Kraftfahrzeugbremse im Rahmen ihrer elektromechanischen Betätigung nur als Feststellbremse genutzt werden kann. Die Selbsthemmung ist für eine Verwendung der elektromechanischen Betätigungsfunktion für die Anwendung bei einer Betriebsbremsung hinderlich, weil sie ein Lösen der Bremse blockieren würde. Ferner ist bei dieser Vorrichtung ein mechanischer Energiespeicher vorgesehen, der beim Betätigen der Spindel-Mutter-Anordnung über den Elektromotor vorgespannt wird. Die Besonderheit der in diesem Stand der Technik beschriebenen Kraftfahrzeugbremse liegt in der Ausgestaltung der Spindel-Mutter-Anordnung, in der die Weltkörper nicht umlaufen sondern über eine Feder vorgespannt sind.

Auch das Dokument WO 2009/046899 A1 beschreibt eine Kraftfahrzeugbremse, die elektromechanisch betätigbar ist. Die elektromechanische Betätigung erfolgt aber sowohl zur Aktivierung der Betriebsbremsfunktion als auch zur Aktivierung der Feststellbremsfunktion. Aus diesem Grund ist die Getriebeanordnung selbsthemmungsfrei ausgebildet. Diese Kraftfahrzeugbremse hat den Vorteil, dass für ihre Ansteuerung kein aufwändiges Hydrauliksystem erforderlich ist, sondern dass stattdessen die Bordelektronik des Fahrzeugs verwendet werden kann, um das Bremssystem anzusteuern. Da die Getriebeanordnung selbsthemmungsfrei ausgebildet ist, ist zum Blockieren der Kraftfahrzeugbremse für die Feststellbremsfunktion eine gesonderte Blockiereinrichtung vorgesehen, bei der ein Hebel magnetisch in eine Blockierstellung gebracht werden kann. Auch bei diesem Stand der Technik ist vorgesehen, eine Spannkraftreserve zum Ausgleich von Setzvorgängen an den Bremsbelägen in Folge eines Abkühlens oder dergleichen nach Zustellen der Bremse im Feststellbremsbetrieb bereitzustellen.

Eine Anordnung gemäß dem Oberbegriff von Anspruch 1 ist ferner in dem Dokument DE 10 2007 046 952 A1 und dem Dokument WO 2009/046899 A1 gezeigt.

Es ist Aufgabe der vorliegenden Erfindung, eine elektromechanisch betätigbare Kraftfahrzeugbremse bereitzustellen, die sich sowohl als Betriebsbremse als auch als Feststellbremse nutzen lässt und die bei einfachem Aufbau zuverlässig ein unbeabsichtigtes Lösen oder Reduzieren der Feststellbremswirkung verhindert.

Diese Aufgabe wird durch eine elektromechanisch betätigbare Kraftfahrzeugbremse der eingangs bezeichneten Art gelöst, bei der vorgesehen ist, dass die Getriebeanordnung eine Schlingfederkupplung aufweist, die in den Kraftfluss zwischen dem motorischen Antrieb und der Spindel derart angeordnet ist, dass die Schlingfederkupplung eine Drehmomentübertragung von dem motorischen Antrieb zu der Spindel zulässt und zum Blockieren einer Drehmomentübertragung von der Spindel zum motorischen Antrieb ausgebildet ist.

Die Erfindung hat den Vorteil, dass durch Verwenden einer Schlingfederkupplung, die in dem Kraftfluss zwischen dem motorischen Antrieb und der Spindel angeordnet ist, einerseits gewährleistet werden kann, dass das von dem motorischen Antrieb aufgebrachte Drehmoment zum Spannen bzw. Betätigen der Kraftfahrzeugbremse zuverlässig zur Spindel übertragen werden kann. Andererseits ist die Schlingfederkupplung derart ausgebildet, dass die von dem Bremsbelag über die Spindel zurückwirkenden Reaktionskräfte, die ein lösen der Bremswirkung, beispielsweise in einer Feststellbremssituation bewirken würden, durch die Schlingfederkupplung zuverlässig blockiert werden. Die Schlingfederkupplung bildet somit einen selbst schaltenden Freilauf, der eine Drehmomentübertragung zur Spindel hin dauerhaft zulässt, eine Drehmomentübertragung in die entgegengesetzte Richtung von der Spindel zum motorischen Antrieb hin aber blockieren kann. Dadurch ist es möglich, eine Selbsthemmung im Getriebe zu vermeiden, wie sie der Stand der Technik beispielsweise vorsieht. Dadurch ist die elektromechanische Kraftfahrzeugbremse auch für den Einsatz als Betriebsbremse geeignet. Ferner ist es dadurch möglich, zusätzliche Schaltelemente einzusparen, wie etwa die eingangs beschriebene Hebelmechanik aus dem Stand der Technik. In diesem Zusammenhang fällt auch eine zusätzliche Ansteuerung dieser Schaltelemente weg.

Des Weiteren sieht die Erfindung vor, dass die Getriebeanordnung wenigstens zwei Getrieberäder aufweist, die über die Schlingfederkupplung unter Vermittlung einer Schlingfeder drehmomentübertragend miteinander verbindbar sind. So ist es möglich, die Schlingfederkupplung in die Getriebeanordnung platzsparend zu integrieren und zwischen den beiden Getrieberädern geschützt unterzubringen.

In diesem Zusammenhang kann vorgesehen sein, dass die Schlingfederkupplung als Schlingfeder eine um einen gehäusefesten Stator mit wenigstens einer Wicklung gewickelte Schraubenfeder mit zwei Enden aufweist, die mit ihrem einen Ende drehmomentübertragend mit einem ersten Getrieberad und mit ihrem zweiten Ende drehmomentübertragend mit einem zweiten Getrieberad koppelbar ist. Die wenigstens eine Wicklung ist dabei in Anlage mit einer Oberfläche des Stators. Bei dieser Ausführungsvariante der Erfindung ist bevorzugt vorgesehen, dass jedes der Getrieberäder jeweils wenigstens eine Klaue aufweist, die mit dem jeweils dem Getrieberad zugeordneten Ende der Schraubenfeder in drehmomentübertragenden Eingriff bringbar ist. Die Klauen dienen sozusagen zur kraft- und drehmomentübertragenden Kopplung des jeweiligen Getrieberads mit der zwischen diesen angeordneten Schraubenfeder. Die Schraubenfeder ist das Kraftübertragungselement, das eine Kraftübertragung von dem motorischen Antrieb zu der Spindel hin zulässt und in der entgegengesetzten Richtung blockiert. Dies wird gemäß einer Ausführungsvariante der Erfindung insbesondere dadurch erreicht, dass sich die Schraubenfeder bei einer Drehmomentübertragung vom motorischen Antrieb zu der Spindel bezüglich des gehäusefesten Stators etwas radial aufweitet, dass sie sicher bei der Drehmomentübertragung auf dem Stator abgleitet, und dass sich die Schraubenfeder im Falle einer Drehmomentübertragung von der Spindel zum motorischen Antrieb bezüglich des gehäusefesten Stator radial zusammenzieht, wobei sie am gehäusefesten Stator radial derart angreift, dass sie eine Drehmomentübertragung sperrt. Beim Blockieren zieht sich die Schraubenfeder also um den gehäusefesten Stator herum zu und sorgt so in Folge der Umschlingung für starke Reibungskräfte, die schließlich eine weitere Bewegung und damit Drehmomentübertragung über die Schraubenfeder verhindern.

Wird die Kraftfahrzeugbremse sowohl als Betriebsbremse als auch als Feststellbremse eingesetzt, so kann es erforderlich sein, für die Funktion als Betriebsbremse in gewissem Rahmen eine Drehmomentübertragung von der Spindel zum motorischen Antrieb hin zuzulassen. Im Rahmen der Feststellbremsfunktion ist eine solche Drehmomentübertragung aber aus den genannten Gründen zu unterbinden. Dies bedeutet, dass für die Funktion als Betriebsbremse und für die Funktion als Feststellbremse sozusagen entgegengesetzte Anforderungen vorliegen. Die vorliegende Erfindung löst in einer Ausführungsvariante die Differenzierung zwischen Betriebsbremsfunktion und Feststellbremsfunktion durch Ausnutzen der der Tatsache, dass zur Aktivierung der Feststellbremse üblicherweise wesentlich höhere Momente bzw. Spannkräfte eingesetzt werden, als im Rahmen der Betriebsbremsfunktion. Je nach Größe bzw. Betrag die eingesetzten Spannkräfte kann also zwischen Betriebsbremsfunktion und Feststellbremsfunktion "umgeschaltet" werden. Konstruktiv wird dieses Umschalten dadurch erreicht, dass bei dieser Ausführungsvariante der Schlingfederkupplung ein Schaltelement zugeordnet ist, welches in einer ersten Schaltstellung eine Drehmomentübertragung von der Spindel zu dem motorischen Antrieb zulässt und bei Erreichen einer zweiten Schaltstellung die Schlingfederkupplung dazu veranlasst, eine Drehmomentübertragung von der Spindel zu dem motorischen Antrieb zu blockieren. Dieses Schaltelement schaltet in Abhängigkeit von der einwirkenden Spannkraft. Dabei ist es erfindungsgemäß möglich, dass das Schaltelement wenigstens ein elastisches Deformationselement umfasst. Das wenigstens eine Deformationselement erlaubt im Rahmen eines bestimmten Deformationsgrades eine Kraftübertragung in beiden Richtungen zwischen motorischen Antrieb und Spindel. Ab einer bestimmten spannkraftbedingten Deformation erreicht das wenigstens eine Deformationselement die zweite Schaltstellung, in der dann eine Kraftübertragung vom motorischen Antrieb zur Spindel hin weiterhin möglich ist, in der entgegengesetzten Richtung aber blockiert wird. Insbesondere kann dabei vorgesehen sein, dass das Schaltelement seine erste oder zweite Schaltstellung nach Maßgabe einer zwischen dem ersten Getrieberad und dem zweiten Getrieberad auf die Schlingfeder wirkenden Spannkraft einnimmt.

Die Ausführungsvariante mit dem Schaltelement führt den Grundgedanken eines mechanischen Freilaufs in der Getriebeanordnung fort, womit in Abhängigkeit von der Kraftübertragungsrichtung eine Drehmomentübertragung möglich ist oder blockiert wird, schafft aber zusätzlich eine Abhängigkeit von der aktuell wirkenden Spannkraft, wobei die Blockierwirkung erst ab einem bestimmten Spannkraftniveau erreicht wird.

Hinsichtlich der konkreten Ausgestaltung des Schaltelements kann vorgesehen sein, dass das wenigstens eine elastische Deformationselement von einer meanderförmig gewickelten Formfeder gebildet ist. Die Formfeder bildet also einzelne Schlingen, die lose gewickelt sind und so ein Deformationsvermögen besitzen. Die Formfeder kann aus Metall, Gummi oder aus einem Kunststoffmaterial hergestellt sein.

Ferner kann erfindungsgemäß vorgesehen sein, dass die Getriebeanordnung einen Planetengetriebemechanismus aufweist. Dadurch lassen sich entsprechend hohe Drehmomente und Spannkräfte aufbringen und gleichzeitig ein leistungsschwacher und damit klein bauender motorischer Antrieb verwenden. In diesem Zusammenhang kann weiter vorgesehen sein, dass der motorische Antrieb einen Elektromotor aufweist, dessen Ausgangswelle mit einem Sonnenrad des Planetengetriebemechanismus gekoppelt ist, wobei ein Hohlrad des Planetengetriebemechanismus gehäusefest angeordnet ist, und wobei Planetenräder des Planetengetriebemechanismus an einem im Gehäuse drehbar gelagerten Planetenträger drehbar gelagert sind. Dabei ist bei einer Ausführungsvariante der Erfindung vorgesehen, dass der Planetenträger an dem bezüglich des Kraftflusses antriebsnahen Getrieberad drehmomentübertragend angreift. Ferner kann in diesem Zusammenhang vorgesehen sein, dass das bezüglich des Kraftflusses antriebsferne Getrieberad drehmomentübertragend mit der Spindel gekoppelt ist.

Die Erfindung wird im Folgenden beispielhaft anhand der folgenden Figuren erläutert. Es stellen dar:
- Fig. 1: eine räumliche Außenansicht für eine Aktuatorbaugruppe der erfindungsgemäßen Kraftfahrzeugbremse;
- Fig. 2: eine achsenthaltende Schnittansicht durch die Aktuatorbaugruppe der Kraftfahrzeugbremse gemäß Figur 1;
- Fig. 3: eine freigeschnittene Ansicht des Elektromotors, der Getriebeanordnung und der Spindel;
- Fig. 4: eine Explosionsansicht zur Erläuterung der Schlingfederkupplung;
- Fig. 5: eine achsorthogonale Schnittansicht der Anordnung aus zwei Getrieberädern mit Schlingfederkupplung;
- Fig. 6: eine räumliche Ansicht der Schlingfeder;
- Fig. 7: eine räumliche Ansicht der Formfeder;
- Fig. 8: eine achsorthogonale Schnittansicht durch die Aktuatorbaugruppe der erfindungsgemäßen Scheibenbremse gemäß Fig. 2 entlang der Schnittlinie VIII-VIII; und
- Fig. 9: eine achsorthogonale Schnittansicht durch die Aktuatorbaugruppe der erfindungsgemäßen Scheibenbremse gemäß Fig. 2 entlang der Schnittlinie IX-IX.

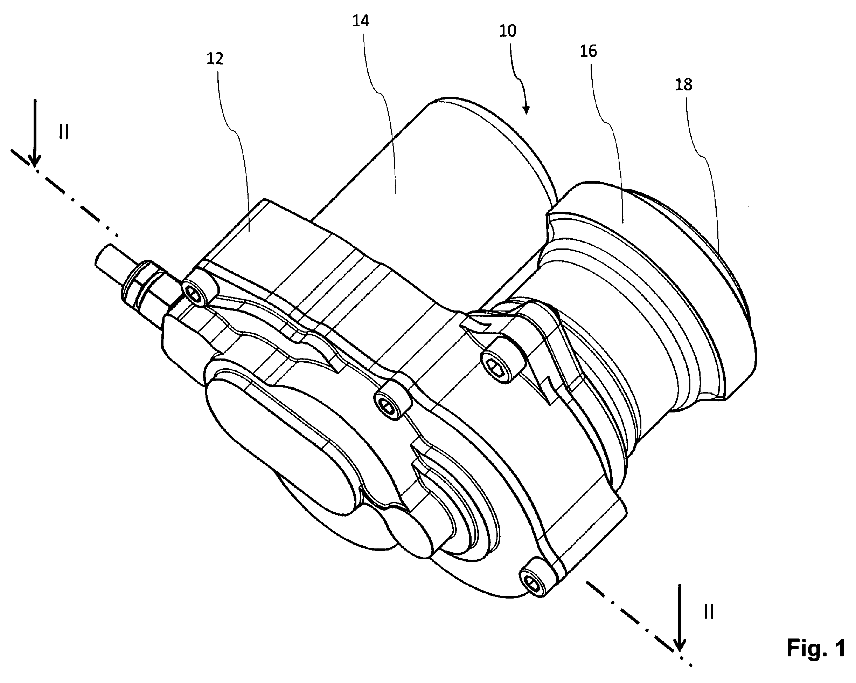

In Figur 1 ist eine Aktuatorbaugruppe einer erfindungsgemäßen Kraftfahrzeugbremse in räumlicher Darstellung gezeigt und allgemein mit 10 bezeichnet. Insbesondere zeigt Figur 1 ein Gehäuse 12, in dem eine Getriebeanordnung angeordnet ist, sowie ein Teilgehäuse 14 zur Unterbringung eines Antriebsmotors und ein weiteres Teilgehäuse 16, in dem ein verschiebbarer Kolben 18 angeordnet ist, mit dem ein nicht gezeigter Bremsbelag in einer Bremseinheit einer Kraftfahrzeugbremse bremswirksam verschoben werden kann. Die in Figur 1 gezeigte Aktuatorbaugruppe 10 der erfindungsgemäßen Kraftfahrzeugbremse lässt sich in üblicher Weise beispielsweise in eine Schwimmsattelbremse einbauen. Hierzu wird auf das Dokument WO 2009/046899 A1 verwiesen, wo eine solche Einbausituation exemplarisch gezeigt ist. Dieses Dokument ist eine Anmeldung der vorliegenden Anmelderin. Da es im Folgenden auf die Aktuatorbaugruppe bestehend aus motorischem Antrieb und Verlagerungsmechanik zur Verlagerung des Bremsbelags ankommt, konzentriert sich die folgende Beschreibung auf diese Komponenten. Auch in den Figuren sind nur entsprechende Komponenten gezeigt.

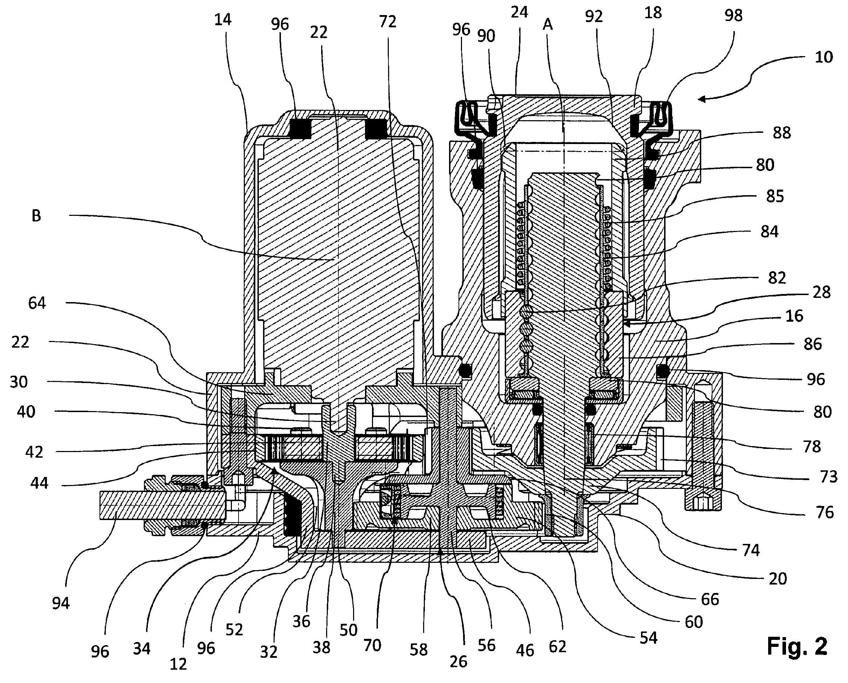

Figur 2 zeigt eine achsenthaltende Querschnittansicht durch die in Figur 1 gezeigte Antriebseinheit 10. Man erkennt, dass das Gehäuse 12 mehrteilig aufgebaut ist und sich aus einem Gehäusedeckel 20, dem Teilgehäuse 14 zur Aufnahme eines Elektromotors 22 und dem Teilgehäuse 16 zur verlagerbaren Aufnahme des Kolbens 18 zusammensetzt. Der Kolben 18 ist entlang der Längsachse A verlagerbar. Seine exponierte Oberfläche 24 wirkt in üblicher Weise mit einer nicht gezeigten Bremsbelaganordnung zum Erzielen einer Bremswirkung zusammen. Im Folgenden soll im Detail auf die Verlagerungsmechanik eingegangen werden.

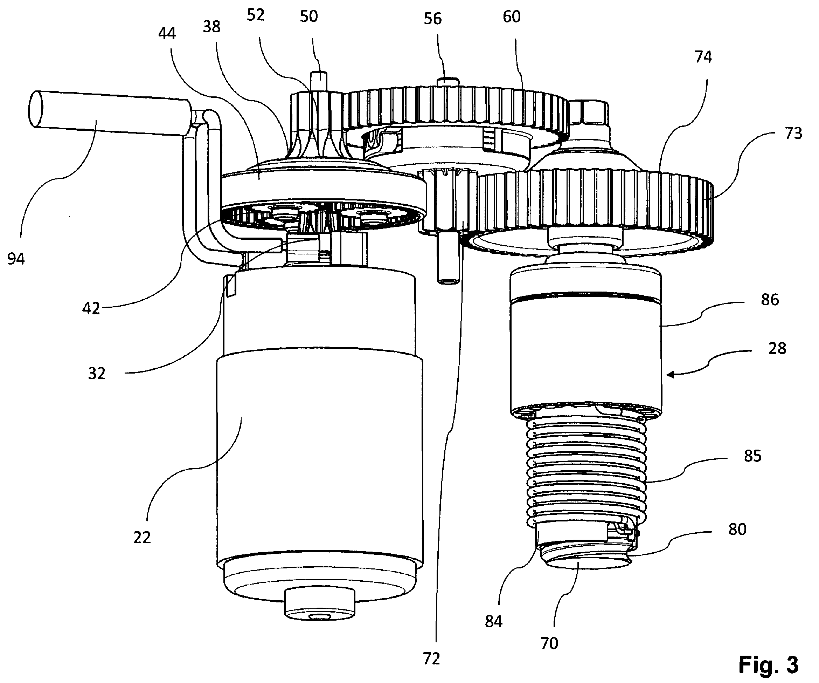

Die Verlagerungsmechanik umfasst eine Getriebeanordnung 26 sowie eine Mutter-Spindel-Anordnung 28. Beide Grundkomponenten der Verlagerungsmechanik sind zusammen mit dem Elektromotor 22 freigeschnitten in Figur 3 dargestellt. Die Getriebeanordnung 26 dient dazu, um eine Drehbewegung des Elektromotors 22 in eine entsprechende Linearbewegung des Kolbens 18 entlang der Längsachse A umzusetzen. Im Einzelnen weist der Elektromotor 22 eine sich entlang der Motorlängsachse B erstrecken der Motorausgangswelle 30 auf. Diese ist mit einem Zahnrad 32 drehfest gekoppelt. Das Zahnrad 32 dient als Sonnenrad eines Planetengetriebes 34. Das Zahnrad 32 weist in seinem motorfernen Ende einen Lagerzapfen 36 auf. Auf diesem Lagerzapfen 36 ist drehbar ein Planetenträger 38 gelagert, der seinerseits wieder mehrere Lagerzapfen 40 aufweist. Die Lagerzapfen 40 dienen dazu, um Planetenräder 42 zu lagern, die mit dem Zahnrad 32 in kämmendem Eingriff stehen.

Radial außerhalb der Planetenräder 42 ist ein Hohlrad 44 gehäusefest angeordnet. Hierzu dient ein weiteres Gehäuseteil 46. Der Planetenträger 38 ist in diesem Gehäuseteil 46 mit einem Lagerzapfen 50 drehbar gelagert. Er weist zwischen den Lagerzapfen 40 und seinem Lagerzapfen 50 eine Außenverzahnung 52 auf. Diese Außenverzahnung 52 kämmt mit einem ersten Getrieberad 54, das auf einem gehäusefesten Stator 56 über einen radial inneren Lageabschnitt 58 drehbar gelagert ist und an seinem Außenumfang eine Außenverzahnung 60 aufweist. Das Getrieberad 54 ist topfartig ausgebildet. In seinem Inneren erstreckt sich ein Reibradabschnitt 62, der an dem Stator 56 angeformt und damit ebenfalls drehfest im Gehäuse 12, insbesondere drehfest am Gehäuseteil 46 und einem weiteren Gehäuseteil 64 angebracht ist, beispielsweise durch Einpressen. Auf dem Stator 56 ist ein zweites Getrieberad 66 drehbar gelagert. Dieses zweite Getrieberad 66 kann über eine Schlingfederkupplung 70 zur Drehmomentübertragung mit dem ersten Getrieberad 54 gekoppelt werden. Hierauf wird im Folgenden noch im Detail eingegangen. Das zweite Getrieberad 66 weist an seinem vom ersten Getrieberad 54 abgewandten Abschnitt eine Außenverzahnung 72 auf. Diese kämmt mit einer Außenverzahnung 73 eines Abtriebszahnrads 74, das drehfest auf einer Spindel 76 der Mutter-Spindel-Anordnung 28 gelagert ist.

Man erkennt in Figur 2, dass die Spindel 76 über ein Radialnadellager 78 und ein Axiallager in dem Gehäuseteil 16 gelagert ist. Die Spindel 76 weist an ihrem Außenumfang eine Gewindeformation 80 auf, in der Wälzkörper 82 aufgenommen sind. Die Wälzkörper 82 sind in einem Wälzkörperkäfig 84 gehalten, der über eine Schraubenfeder 85 in seine in Figur 2 und 3 gezeigte Ausgangsstellung vorgespannt ist. Auf den Wälzkörpern 82 lagert eine Mutter 86, die bei einer Drehbewegung der Spindel 76 in üblicher Weise eine Linearbewegung innerhalb des Gehäuseteils 16 ausführt. Die Mutter 86 ist fest mit einem Koppelelement 88 verbunden, das sich bei der Bewegung der Mutter 86 entsprechend mit verlagert. Das Koppelelement 88 weist an seinem freien Ende eine konische Koppelfläche 90 auf, die mit einer korrespondierenden Kolbenfläche 92 im Inneren des Kolbens des 18 in Eingriff bringbar und zusammen dem Kolben 18 zur Verlagerung desselben und damit zur Verlagerung des nicht gezeigten Bremsbelags verschiebbar ist.

Ferner erkennt man in Figur 2 ein Anschlusskabel 94, sowie verschiedene Dichtungen 96 um die Gehäuseteile zueinander und daran angeschlossene Komponenten abzudichten bzw. gedichtet zu führen. Schließlich erkennt man noch dass der Kolben 18 mit einem Balg 98 gedichtet ist.

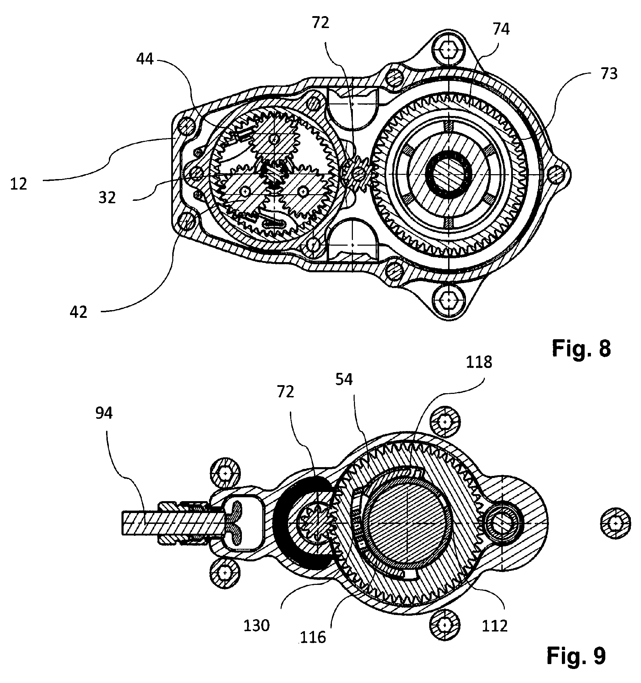

In den Figuren 2, 3 sowie 8 und 9 erkennt man Einzelheiten der Verlagerungsmechanik.

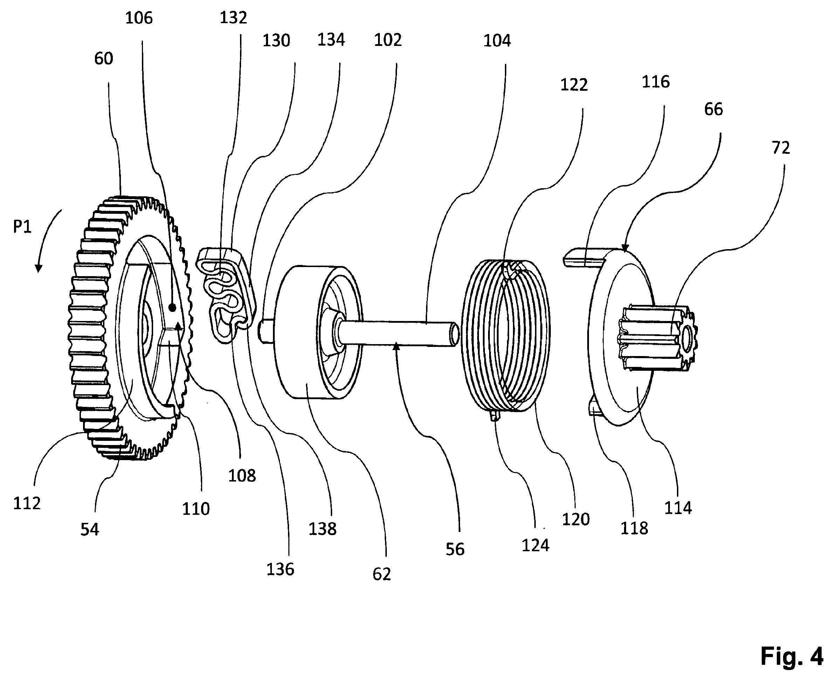

Wendet man sich nun den Figuren 4 bis 7 zu, so erkennt man darin den Aufbau und die einzelnen Komponenten der Schlingfederkupplung 70. Im Inneren der Schlingfederkupplung 70 ist der Stator 56 mit seinem Reibradabschnitt 62 vorgesehen. Wie bereits ausgeführt, ist der Stator 56 gehäusefest und damit unverdrehbar über zwei Lagerzapfen 102, 104 im Gehäuse gelagert. Auf dem Stator 56 lagert das erste Getrieberad 54. Dieses weist an seinem Außenumfang die Außenverzahnung 60 auf und ist im Inneren mit einem Hohlraum 106 versehen. Der Hohlraum 106 ist mit einer seitlichen Tasche 108 mit Anlagefläche 110 versehen. Ferner erstreckt sich von einer Seitenfläche des ersten Getrieberads 54 aus eine kreissegmentförmige Klaue 112. Das zweite Getrieberad 66 weist neben seiner Außenverzahnung 72 eine plattenartige Struktur 114 auf, an der eine erste Klaue 116 und eine zweite Klaue 118 angeordnet sind, die sich in axialer Richtung erstrecken. Ferner erkennt man in Figur 4 eine Schraubenfeder 120 mit abgekröpften Enden 122 und 124. Die Schraubenfeder 120 ist derart dimensioniert, dass sie im entspannten Zustand an der Außenumfangsfläche des Reibradabschnitts 62 satt anliegt, jedoch auf dieser abgleiten kann. Zur Montage wird die Schraubenfeder 120 auf den Reibradabschnitt 62 aufgesteckt. Diese Anordnung wird im Hohlraum 106 aufgenommen. Die beiden abgekröpften Enden 122 und 124 erstrecken sich in radialer Richtung so weit nach außen, dass sie, wie im Folgenden im Detail erläutert werden wird, mit den Kauen 112, 116, 118 in Eingriff bringbar sind, ohne dass sie an den den Hohlraum 106 begrenzenden Flächen entlangreiben oder kratzen.

Ferner erkennt man in Figur 4 eine Formfeder 130 mit mehreren gewundenen Schlingen 132, die sich entlang eines Basisstrangs 134 erstrecken. Die beiden Enden 136, 138 greifen ineinander. Die gewundenen Schlingen 132 lassen sich bei Einwirkung einer Kraft F aus ihrer entspannten Stellung in eine komprimierte Stellung komprimieren. Die Formfeder 130 ist in der Tasche 108 angeordnet und liegt mit ihrer letzten Schlinge an der Anlagefläche 110 an.

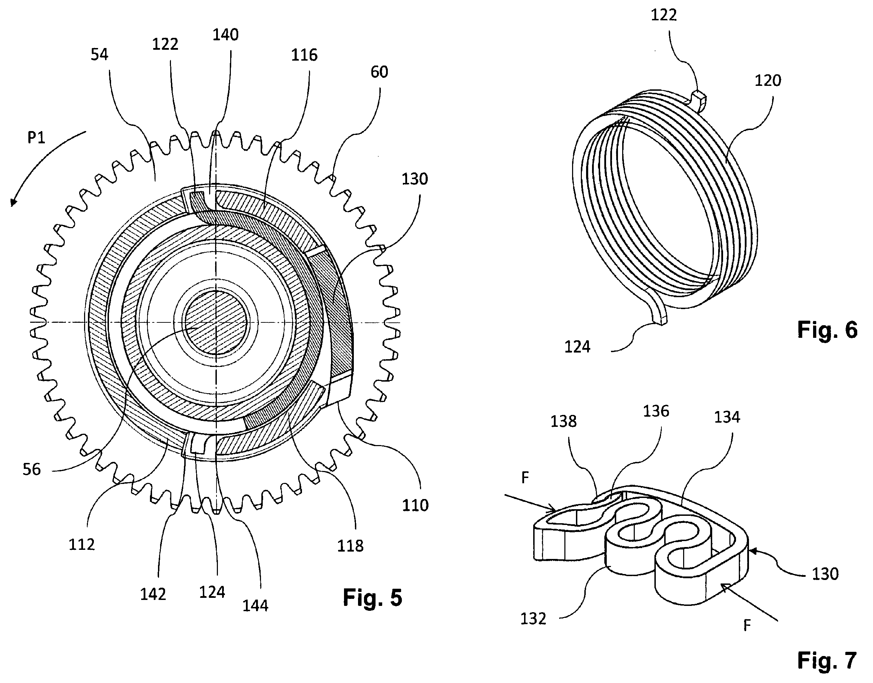

Man erkennt den zusammengebauten Zustand der Schlingfederkupplung 70 in Figur 5, wobei zu ergänzen ist, dass das abgekröpfte Federende 122 zwischen der Klaue 116 und der Klaue 118 in dem Zwischenraum 140 aufgenommen ist.

Generell wird die vorstehend beschriebene Kraftfahrzeugbremse mit ihrer vorstehend beschriebenen Aktuatorbaugruppe sowohl zur Aktivierung einer Betriebsbremsfunktion als auch zur Aktivierung einer Feststellbremsfunktion eingesetzt. Dies bedeutet, dass im Betriebsbremsfall der Kolben 18 über den Elektromotor 22 unter Vermittlung der Getriebeanordnung 26 und der Mutter-Spindel-Anordnung 28 derart verlagert wird, dass er sich aus dem Gehäuseteile 16 heraus verlagert. Gleichermaßen muss es möglich sein, dass sich der Kolben 18 wieder bei Freigabe des Motors 22 zum Lösen der Bremse im Betriebsbremsfall teilweise oder ganz in seine Ausgangsposition gemäß Figur 2 zurück verlagert. Dies geschieht in der Regel allein durch die Wirkung einer Entspannung am nicht gezeigten Bremsbelags sowie unter Vermittlung der Rückstellfeder 85, ohne dass hierzu ein motorischer Antrieb vom Elektromotor 42 erforderlich wäre. Dies entspricht der Funktionsweise einer hydraulischen Verlagerung eines entsprechenden Bremskolben, bei der der Bremskolben auch nicht aktiv durch Erzeugen eines hydraulischen Unterdrucks zurückgezogen werden muss. Für den Betriebsbremsfall sei angemerkt, dass relativ geringe Spannkräfte erforderlich sind.

In einer Feststellbremssituation wird der Kolben 18 mit relativ großer Spannkraft zur Erzeugung einer Feststellbremswirkung verlagert und soll in dieser Position dauerhaft gehalten werden, um das Kraftfahrzeug sicher festzustellen. Die erreichte Kolbenposition ist unbedingt aufrechtzuerhalten und es ist zu vermeiden, dass sich der Kolben 18 im Laufe der Zeit durch Setzvorgänge in der Getriebeanordnung 26 zurück verlagert. Erst dann, wenn eine aktive Ansteuerung über den Motor 22 erfolgt mit der die Feststellbremse aktiv gelöst werden soll, kann sich der Kolben 18 wieder in seine Ausgangsposition gemäß Figur 2 zurück verlagern.

Es muss also unterschieden werden zwischen der Betriebsbremssituationen und der Feststellbremssituation, wobei je nach aktuellem Zustand der Bremse ein Kraftfluss vom Kolben 16 zum Motor 22 hin zuzulassen (Betriebsbremse) oder zu unterbinden (Feststellbremse) ist. Um dieser Anforderung gerecht zu werden, wird die Schlingfederkupplung 70 in der gezeigten Weise eingesetzt. Die Schlingfederkupplung 70 funktioniert in Wechselwirkung mit den beiden Getrieberädern 54 und 66 wie folgt:
Zunächst sei der Kraftfluss vom motorseitigen Getrieberad 54 aus betrachtet, d.h. der Fall, bei dem der Motor 22 angetrieben wird und das Getrieberad 54 unter Vermittlung des Planetengetriebes 34 drehantreibt. Hier gibt es zwei Drehrichtungen, nämlich die Drehrichtung des Getrieberads 54 im Gegenuhrzeigersinn zum Spannen der Bremse (Spannen der Betriebsbremse und der Feststellbremse) und die Drehrichtung des Getrieberad 54 im Uhrzeigersinn zum aktiven Lösen der Bremse (Lösen der Feststellbremse).

Bei einer Drehung des ersten Getrieberads 54 im Gegenuhrzeigersinn entsprechend Pfeil P1 - dies entspricht einer Bewegung zum Verlagern des Kolbens 18 aus dem Gehäuse 16 heraus, d.h. zum Aktivieren der Bremse über den Motor 22 sowohl in einer Betriebsbremssituation als auch in einer Feststellbremssituation - wird die Formfeder 130 über die Anlagefläche 110 gegen die Klaue 116 verschoben. Je größer der Widerstand wird, den die Klaue 116 einer solchen Verschiebung entgegensetzt (d.h. bei steigenden Spannkräften), desto stärker wird die Formfeder 130 komprimiert. Die Schraubenfeder 120 bleibt bei dieser Betätigung im Gegenuhrzeigersinn entsprechend Pfeil P1 wirkungslos, weil ihre Federenden sich frei in dem Spielraum zwischen den Klauen 112, 116 und 118 bewegen können und sie auf dem Reibradabschnitt 62 abgleitet.

In einer Betriebsbremssituation sind die Spannkräfte, die am Kolben auftreten, relativ klein so dass es allenfalls zu einer geringen Deformation der Formfeder 130 kommt. Treten größere Spannkräfte auf, wie dies bei der Aktivierung der Feststellbremse der Fall ist, wenn über den Kolben 18 die Bremsbeläge stark an die Bremsscheibe gedrückt werden müssen, so wird die Formfeder 130 stärker komprimiert. Wenn die Formfeder 130 in Folge einer Drehung entsprechend Pfeil P1 stärker komprimiert wird bedeutet dies, dass sich nun das erste Getrieberad 54 relativ zum zweiten Getrieberad 56 entsprechend der Komprimierung der Formfeder 130 verlagert hat. Die maximale Relativverlagerung ist dadurch bestimmt, dass sich die Klaue 112 mit ihrer Stirnseite 142 unter Vermittlung des abgekröpften Endes 124 an die Klaue 118 und deren Stirnseite 144 anlegt. Ist dieser Zustand erreicht, so ist die Formfeder 130 maximal komprimiert und es wird jede weitere Drehung des Elektromotors 22 über die Getriebeanordnung 26 zur Mutter-Spindel-Anordnung 28 zum weiteren Zuspannen der Feststellbremse übertragen.

Ist die Feststellbremse zugespannt, so wirken aus der Spannkraft resultierende Reaktionskräfte auf das Getriebe zurück. Diese Reaktionskräfte, die über die Mutter-Spindel-Anordnung 28, das Abtriebszahnrad 74 und die Außenverzahnung 72 auf die Klauen 116 und 118 übertragen werden, versuchen die Klauen 116, 118 in ihre Ausgangsstellung zurückzudrängen, d.h. im Gegenuhrzeigersinn zu bewegen. Sobald aber die Klaue 116 versucht, in ihren Ausgangszustand zurückzukehren, d.h. sich im Gegenuhrzeigersinn zu bewegen, gelangt sie in Eingriff mit dem gekröpften Ende 122 der Schraubenfeder 120. In Folge dieses gegenseitigen Eingriffs wird unter der Bewegungstendenz der Klaue 116 im Gegenuhrzeigersinn wird die Schraubenfeder 120 um den Reibradabschnitt 62 zugezogen, so dass sich deren Schlingen verengen und an der Außenumfangsfläche des Reibradabschnitts 62 stärker angreifen. Dieses Umschlingen der Außenumfangsfläche des Reibradabschnitts 62 führt dazu, dass die Schraubenfeder 120 nicht weiter auf diese außen Umfangsfläche abgleiten kann, sondern sozusagen an dieser festhält. Demzufolge kann sich die Klaue 116 nicht in ihre Ausgangsstellung zurück bewegen. Die Feststellbremse bleibt aktiviert. Ein Setzvorgang ist damit ausgeschlossen.

Zum Lösen der Feststellbremse ist wiederum eine Ansteuerung des Motors 22 erforderlich. Diese erfolgt derart, dass das Getrieberad 54 im Uhrzeigersinn gedreht wird. Bewegt sich das Getrieberad 54 im Uhrzeigersinn entsprechend Pfeil P2 - dies entspricht einer Bewegung zum Verlagern des Kolbens 18 in das Gehäuse 16 hinein, d.h. zum aktiven Lösen der Bremse über den Motor 22 beim Deaktivieren der Feststellbremse - so bewegt sich entsprechend die Klaue 112 ebenfalls im Uhrzeigersinn und löst die Spannung an der Formfeder 130. Darüber hinaus wird die Schraubenfeder 120 gelöst und gibt die Klaue 118 frei. Diese kann sich - der Klaue 112 folgend - zurück bewegen, was unter der Wirkung der Rückstellfeder 85 erfolgt.

Die Schlingfederkupplung 70 hat also die generelle Wirkung, dass sie für die Feststellbremsfunktion sicherstellt, dass eine Drehmomentübertragung vom Motor zur Mutter-Spindel-Anordnung auch bei hohen Spannkräften erfolgt und dass Setzeffekten oder ein unbeabsichtigtes Lösen der Feststellbremse durch die Wirkung der Schlingfederkupplung 70, insbesondere durch die Wirkung der sich dann zuziehenden und fest auf der Außenumfangsfläche des Reibradabschnitt 62 angreifenden Schraubenfeder 120, verhindert wird. Soll lediglich eine Feststellbremsfunktion realisiert werden, ist die Formfeder 130 eine Option kann weggelassen werden.

Soll mit der Bremse sowohl eine Betriebsbremsfunktion also eine Feststellbremsfunktion unter elektromechanischer Aktivierung vorgesehen sein, so wird zusätzlich die Formfeder 130 eingesetzt, die sich in Abhängigkeit von dem aktuellen Spannungszustand mehr oder weniger stark deformiert. Bei geringen Spannkräften, wie sie üblicherweise während einer Betriebsbremsung auftreten, wird die Formfeder 130 überhaupt nicht oder nur in geringem Maße deformiert, so dass sie sozusagen die Schraubenfeder 120 (Schlingfeder) inaktiv hält. Dadurch kann eine Selbsthemmung im Getriebe für die Betriebsbremsfunktion unterbunden werden. Es ist dann ein Kraftfluss durch das Getriebe in beide Richtungen zwischen motorischem Antrieb und Mutter-Spindel-Anordnung möglich. Erst wenn die Formfeder 130 hinreichend stark komprimiert ist, wird sozusagen die Schraubenfeder 120 (Schlingfeder) in ihrer Funktion aktiv und blockiert einen Kraftfluss durch das Getriebe von der Mutter-Spindel-Anordnung zum Elektromotor hin. Die Formfeder 130 ist also in dem gezeigten Ausführungsbeispiel erforderlich, weil beide Bremsfunktionen - Betriebsbremsfunktion und Feststellbremsfunktion - bereitgestellt werden sollen.

Das vorstehend geschilderte Ausführungsbeispiel zeigt einen verhältnismäßig einfachen Aufbau für eine Aktuierungsmechanik einer Kraftfahrzeugbremse, die eine bedarfsweise selbstständige Zuschaltung bzw. Abschaltung einer Selbsthemmung im Getriebe in Abhängigkeit von Spannungszuständen ermöglicht. Aktiv ansteuerbare Schaltmittel sind hierfür nicht erforderlich. Die Grundfunktion der Schlingfederkupplung zum Aufrechterhalten eines Feststellbremszustands, wie sie vorstehend beschrieben wurde, ist auch dann ausreichend gewährleistet, wenn die Fahrzeugbremse keine elektromechanisch aktivierte Betriebsbremsfunktion haben soll und lediglich die Feststellbremsfunktion elektromechanisch ausgeführt werden soll.

## Patentansprüche

1. Kraftfahrzeugbremse, insbesondere elektromechanisch betätigbare Kraftfahrzeugbremse, mit einer Aktuatorbaugruppe (10) umfassend:
- ein Gehäuse (12),
- ein relativ zu dem Gehäuse (12) verlagerbares Stellglied (18) zum Verlagern eines Bremsbelags,
- einen motorischen Antrieb (22),
- eine zwischen dem motorischen Antrieb (22) und dem verlagerbaren Stellglied (18) angeordnete Verlagerungsmechanik,
- eine der Verlagerungsmechanik zugeordnete Getriebeanordnung (26),
wobei die Verlagerungsmechanik einen Kugelgewindetrieb (28) mit einer drehantreibbaren Spindel (76)und einer in dem Gehäuse (12) linear verschiebbaren Mutter (86) aufweist, wobei die Mutter (86) zur Verlagerung des Stellglieds (18) durch Drehantreiben der Spindel (76) innerhalb des Gehäuses (12) verlagerbar ist, wobei die Getriebeanordnung (26) eine Schlingfederkupplung (70) aufweist, die in den Kraftfluss zwischen dem motorischen Antrieb (22) und der Spindel (76) derart angeordnet ist, dass die Schlingfederkupplung (70) eine Drehmomentübertragung von dem motorischen Antrieb (22) zu der Spindel (76) zulässt und zum Blockieren einer Drehmomentübertragung von der Spindel (76) zum motorischen Antrieb (22) ausgebildet ist,
**dadurch gekennzeichnet, dass** die Getriebeanordnung (26) wenigstens zwei Getrieberäder (54, 66) aufweist, die über die Schlingfederkupplung (76) unter Vermittlung einer Schlingfeder (120) drehmomentübertragend miteinander verbindbar sind.

2. Kraftfahrzeugbremse nach Anspruch 1,
**dadurch gekennzeichnet, dass** die Schlingfeder (120) eine um einen gehäusefesten Stator (56) mit wenigstens einer Wicklung gewickelte Schraubenfeder mit zwei Enden (122, 124) aufweist, die mit ihrem einen Ende drehmomentübertragend mit dem ersten Getrieberad (54) und mit ihrem zweiten Ende drehmomentübertragend mit dem zweiten Getrieberad (66) koppelbar ist.

3. Kraftfahrzeugbremse nach Anspruch 2,
**dadurch gekennzeichnet, dass** jedes der Getrieberäder (54, 66) jeweils wenigstens eine Klaue (112, 116, 118) aufweist, die mit dem jeweils dem Getrieberad (54, 66) zugeordneten Ende der Schraubenfeder (120) in drehmomentübertragenden Eingriff bringbar ist.

4. Kraftfahrzeugbremse nach Anspruch 2 oder 3,
**dadurch gekennzeichnet, dass** sich die Schraubenfeder (120) bei einer Drehmomentübertragung vom motorischen Antrieb (22) zu der Spindel (76) bezüglich des gehäusefesten Stators (56) derart radial aufweitet, dass sie bei der Drehmomentübertragung auf dem Stator (56) abgleitet, und dass sich die Schraubenfeder (120) im Falle einer Drehmomentübertragung von der Spindel (76) zum motorischen Antrieb (22) bezüglich des gehäusefesten Stators (56) radial zusammenzieht, wobei sie sich am gehäusefesten Stator (56) radial derart anlegt, dass sie eine Drehmomentübertragung sperrt.

5. Kraftfahrzeugbremse nach einem der vorangehenden Ansprüche,
**dadurch gekennzeichnet, dass** der Schlingfederkupplung (70) ein Schaltelement (130) zugeordnet ist, welches in einer ersten Schaltstellung eine Drehmomentübertragung von der Spindel (76) zu dem motorischen Antrieb (22) zulässt und bei Erreichen einer zweiten Schaltstellung die Schlingfederkupplung (70) dazu veranlasst, eine Drehmomentübertragung von der Spindel (76) zu dem motorischen Antrieb (22) zu blockieren.

6. Kraftfahrzeugbremse nach Anspruch 5,
**dadurch gekennzeichnet, dass** das Schaltelement (130) wenigstens ein elastisches Deformationselement umfasst.

7. Kraftfahrzeugbremse nach Anspruch 5 oder 6,
**dadurch gekennzeichnet, dass** das wenigstens eine elastische Deformationselement von einer meanderförmig gewickelten Formfeder gebildet ist.

8. Kraftfahrzeugbremse nach einem der Ansprüche 5 bis 7,
**dadurch gekennzeichnet, dass** das Schaltelement (130) seine erste oder zweite Schaltstellung nach Maßgabe einer zwischen dem ersten Getrieberad (54) und dem zweiten Getrieberad (66) auf die Schlingfeder (120) wirkenden Spannkraft einnimmt.

9. Kraftfahrzeugbremse nach einem der vorangehenden Ansprüche,
**dadurch gekennzeichnet, dass** die Getriebeanordnung (26) einen Planetengetriebemechanismus (34) aufweist.

10. Kraftfahrzeugbremse nach einem der vorangehenden Ansprüche,
**dadurch gekennzeichnet, dass** der motorische Antrieb (22) einen Elektromotor aufweist, dessen Ausgangswelle (32) ein Sonnenrad des Planetengetriebemechanismus (34) aufweist, wobei ein Hohlrad (44) des Planetengetriebemechanismus (34) gehäusefest angeordnet ist, und wobei Planetenräder (42) des Planetengetriebemechanismus (34) an einem im Gehäuse (12) drehbar gelagerten Planetenträger (38) drehbar gelagert sind.

11. Kraftfahrzeugbremse nach Anspruch 1 und 10,
**dadurch gekennzeichnet, dass** der Planetenträger (38) an dem bezüglich des Kraftflusses antriebsnahen Getrieberad (54) drehmomentübertragend angreift.

12. Kraftfahrzeugbremse nach Anspruch 11,
**dadurch gekennzeichnet, dass** das bezüglich des Kraftflusses antriebsferne Getrieberad (66) drehmomentübertragend mit der Spindel (76) gekoppelt ist.

## Claims

1. Motor vehicle brake, in particular electromechanically actuable motor vehicle brake, having an actuator assembly (10) with:
- a housing (12),
- a relative to the housing (12) displaceable actuating element (18) for displacement of a brake pad,
- a motor drive (22),
- a displacement mechanism arranged between the motor drive (22) and the displaceable actuating element (18),
- a transmission arrangement (26) allocated to the displacement mechanism,
wherein the displacement mechanism comprises a ball screw (28) with a rotary drivable spindle (76), and a within the housing (12) linearly displacable nut (86), wherein the nut (86) for a displacement of the actuating element (18) is displaceable by rotary driving of the spindle (76) within the housing (12), wherein the transmission arrangement (26) comprises a wrap spring clutch (70) which is arranged in the force flow between the motor drive (22) and the spindle (76) such that the wrap spring clutch (70) allows a torque transmission from the motor drive (22) to the spindle (76) and is configured to block a torque transmission from the spindle (76) to the motor drive (22),
**characterized in that** the transmission arrangement (26) comprises at least two gear wheels (54, 66) which are torque-transmittingly connectable to each other via the wrap spring clutch (70) under intermediation of a wrap spring (120).

2. Motor vehicle brake according to claim 1,
**characterized in that** the wrap spring (120) comprises a coil spring with two ends (122, 124) wound around a fixedly secured to the housing stator (56) with at least one winding, which with its one end can torque-transmittingly be coupled with the first gear wheel (54) and with its second end can torque-transmittingly be coupled with the second gear wheel (66).

3. Motor vehicle brake according to claim 2,
**characterized in that** each of the gear wheels (54, 66), respectively, comprises a claw (112, 116, 118) which can be brought into a torque transmitting engagement with the end of the coil spring (120) allocated to the gear wheel (54, 66).

4. Motor vehicle brake according to claim 2 or 3,
**characterized in that** the coil spring (120) expands radially such during a torque transmission from the motor drive (22) to the spindle (76) in relation to the fixedly secured to the housing stator (56) that it slips on the stator (56) during the torque transmission, and that the coil spring (120) contracts radially in relation to the fixedly secured to the housing stator (56) in case of a torque transmission from the spindle (76) to the motor drive (22), wherein it lays onto the fixedly secured to the housing stator (56) such that it locks a torque transmission.

5. Motor vehicle brake according to one of the preceding claims,
**characterized in that** a switching element (130) is assigned to the wrap spring clutch (70), which in a first switch position allows a torque transmission from the spindle (76) to the motor drive (22) and at reaching a second switch position causes the wrap spring clutch (70) to block a torque transmission from the spindle (76) to the motor drive (22).

6. Motor vehicle brake according to claim 5,
**characterized in that** the switching element (130) comprises at least one elastic deformation element.

7. Motor vehicle brake according to claim 5 or 6,
**characterized in that** the at least one elastic deformation element is formed by a meander-shaped wound spring.

8. Motor vehicle brake according to one of claims 5 to 7,
**characterized in that** the switching element (130) assumes its first or second switching position in compliance with a loading force acting between the first gear wheel (54) and the second gear wheel (66) on the wrap spring (120).

9. Motor vehicle brake according to one of the preceding claims,
**characterized in that** the transmission arrangement (26) comprises a planetary gear mechanism (34).

10. Motor vehicle brake according to one of the preceding claims,
**characterized in that** the motor drive (22) comprises an electric motor whose output shaft (32) comprises a sun gear of the planetary gear mechanism (34), wherein a ring gear (44) of the planetary gear mechanism (34) is arranged fixedly secured to the housing, and wherein planetary gears (42) of the planetary gear mechanism (34) are pivot-mounted to a planetary carrier (38) pivot-mounted in the housing (12).

11. Motor vehicle brake according to claims 1 and 10,
**characterized in that** the planetary carrier (38) engages torque-transmittingly on the gear wheel (54) which is close in terms of force flow.

12. Motor vehicle brake according to claim 11,
**characterized in that** the gear wheel (66) which is distant in terms of force flow is torque-transmittingly coupled to the spindle (76).

## Revendications

1. Frein de véhicule à moteur, plus particulièrement un frein de véhicule pouvant être actionné de manière électromécanique, pourvu d'un bloc d'actionneurs (10) comprenant :
- un carter (12),
- un organe de réglage (18) pouvant être déplacé par rapport au carter (12) et servant à déplacer une plaquette de frein,
- un entraînement motorisé (22)
- un mécanisme de déplacement disposé entre l'entraînement motorisé (22) et l'organe de réglage (18) déplaçable
- un système de transmission (26) associé audit mécanisme de déplacement,
ce mécanisme de déplacement présentant une vis d'entraînement à billes (28) pourvue d'une vis (76) pouvant être entraînée en rotation et d'un écrou (86) pouvant être linéairement déplacé dans le carter (12), cet écrou (86) pouvant être déplacé par l'entraînement en rotation de la vis (76) à l'intérieur du carter (12) pour déplacer l'organe de réglage (18),
le système de transmission (26) présentant un accouplement à ressort de torsion (70) qui est disposé de telle manière dans le flux de forces, entre l'entraînement motorisé (22) et la vis (76), que l'accouplement à ressort de torsion (70) permet le transfert du couple de l'entraînement motorisé (22) vers la vis (76), et qui est conçu de manière à pouvoir bloquer le transfert du couple de la vis (76) vers l'entraînement motorisé (22),
**caractérisé en ce que** le système de transmission (26) présente au moins deux roues de transmission (54, 66) pouvant être reliées l'une à l'autre par le biais de l'accouplement à ressort de torsion (76), moyennant un ressort de torsion (120), pour transmettre un couple.

2. Frein de véhicule à moteur selon la revendication 1,
**caractérisé en ce que** le ressort de torsion (120) présente un ressort hélicoïdal à deux extrémités (122, 124), enroulé par le biais d'au moins une spire autour d'un stator (56) monté fixement sur le carter, lequel ressort peut être couplé via une de ses extrémités à la première roue de transmission (54) pour transmettre un couple, et via sa deuxième extrémité, à la seconde roue de transmission (66) pour transmettre un couple.

3. Frein de véhicule à moteur selon la revendication 2,
**caractérisé en ce que** chacune des roues de transmission (54, 66) présente au moins une mâchoire (112, 116, 118) qui peut être amenée en prise avec l'extrémité du ressort hélicoïdal (120) respectivement associée à la roue de transmission (54, 66) pour transmettre un couple.

4. Frein de véhicule à moteur selon la revendication 2 ou 3,
**caractérisé en ce que** lors de la transmission d'un couple de l'entraînement motorisé (22) vers la vis (76), le ressort hélicoïdal (120) s'élargit radialement par rapport au stator (56) disposé fixement sur le carter de telle sorte qu'il glisse sur le stator (56) au moment de transmission du couple, et **en ce que** dans le cas d'une transmission de couple de la vis (76) vers l'entraînement motorisé (22), le ressort hélicoïdal (120) se rétracte radialement par rapport au stator (56) monté fixement sur le carter, ce ressort venant radialement en application sur le stator (56) monté fixement sur le carter de sorte qu'il bloque le transfert de couple.

5. Frein de véhicule à moteur selon l'une des revendications précédentes, **caractérisé en ce qu'**un élément de commutation (130) est associé à l'accouplement à ressort de torsion (70), lequel élément permet, dans une première position de commutation, une transmission de couple de la vis (76) vers l'entraînement motorisé (22) et amène l'accouplement à ressort de torsion (70) à bloquer une transmission de couple de la vis (76) vers l'entraînement motorisé (22) une fois qu'est atteinte une seconde position de commutation,

6. Frein de véhicule à moteur selon la revendication 5,
**caractérisé en ce que** l'élément de commutation (130) comprend au moins un élément de déformation élastique.

7. Frein de véhicule à moteur selon la revendication 5 ou 6,
**caractérisé en ce que** ledit au moins un élément de déformation élastique est formé par un ressort de forme enroulé en forme de méandres.

8. Frein de véhicule à moteur selon l'une des revendications 5 à 7,
**caractérisé en ce que** l'élément de commutation (130) prend sa première ou sa deuxième position selon une force de tension agissant sur le ressort de torsion (120), entre la première roue de transmission (54) et la deuxième roue de transmission (66).

9. Frein de véhicule à moteur selon l'une des revendications précédentes, **caractérisé en ce que** le système de transmission (26) présente un mécanisme de transmission planétaire (34).

10. Frein de véhicule à moteur selon l'une des revendications précédentes, **caractérisé en ce que** l'entraînement motorisé (22) comporte un moteur électrique dont l'arbre de sortie (32) présente une roue solaire du mécanisme de transmission planétaire (34), une roue creuse (44) du mécanisme de transmission planétaire (34) étant disposée fixement sur le carter, et des roues planétaires (42) du mécanisme de transmission planétaire (34) étant montées mobiles en rotation sur un support planétaire (38) lui-même monté mobile en rotation à l'intérieur du carter (12).

11. Frein de véhicule à moteur selon la revendication 1 et 10,
**caractérisé en ce que** le support planétaire (38) est en prise sur la roue de transmission (54) qui est située à proximité de l'entraînement par rapport au flux de forces pour transmettre le couple.

12. Frein de véhicule à moteur selon la revendication 11,
**caractérisé en ce que** la roue de transmission (66) qui est située éloignée de l'entraînement par rapport au flux de forces est couplée à la vis (76) pour transmettre le couple.
